# EUROPEAN PATENT APPLICATION

(11) **EP 2 750 458 A1**
(43) Date of publication of application: **02.07.2014**
(21) Application number: 12868699.5
(22) Date of filing: 15.02.2012
(51) Int. Cl.: H04W 56/00

(54) **COMMUNICATION METHOD, USER EQUIPMENT AND BASE STATION**

(71) Applicant: Huawei Technologies Co., Ltd., Shenzhen, Guangdong 518129 (CN)
(72) Inventor: YANG, Dongli, Shenzhen Guangdong 518129 (CN); HE, Tao, Shenzhen Guangdong 518129 (CN)
(74) Representative: Isarpatent
(86) International application number: PCT/CN2012/071163
(87) International publication number: WO 2013/120258

(57) **Abstract**

Embodiments of the present invention provide a communication method, a base station and a user equipment. The communication method includes: sending, by a base station, a random access response message to a user equipment UE, where the random access response message includes a timing advance command, and a value *T_{A}* of the timing advance command is N_{TA}/(N*Ts), where, the N_{TA} indicates the amount of the time alignment the UE, the N*Ts indicates a unit granularity for the UE to perform time alignment, the N is greater than 16, and the Ts indicates the smallest time unit. In the present invention, the unit granularity for the UE to perform time alignment may be enlarged, so that the UE can use a larger amount of the time alignment when performing the time alignment, thereby supporting the coverage of a cell with a long distance.

## Description

### TECHNICAL FIELD

Embodiments of the present invention relate to the technical field of communications, and in particular, to a communication method, a user equipment and a base station.

### BACKGROUND

A long term evolution (Long Term Evolution, LTE for short) system requires time alignment (time alignment) of uplink signals from different user equipments (UE, Equipment) to an evolved NodeB (evolved NodeB, eNB for short), so as to ensure the orthogonality of the uplink signals between the UEs, thereby facilitating the elimination of intra-cell interference. The time alignment of uplink transmission is implemented by performing timing advance (Timing Advance, TA for short) at a UE side.

At present, in the process in which the UE accesses the LTE initially, the UE first sends a preamble sequence of an uplink physical random access channel (Physical Random Access Channel, PRACH for short). The eNB, by measuring the preamble sequence, returns a timing advance command (TA command, Timing Advance Command) to the UE through a random access response (Random Access Response, RAR for short) message, and the UE performs corresponding uplink time alignment according to the TA command in the received RAR message. That is, the amount of the time alignment (amount of the time alignment) is N_{TA}=T_{A}* 16T_{S}, where the T_{A} is a value of the TA command, namely, an index value (index value), and 16Tₛ=16/(15000*2048)s=0.52 µs. A value range of the TA command returned to the UE by the eNB is from 0 to 1282, and a time range corresponding to the TA is from 0 to 0.67 ms, so the coverage that can be supported cannot satisfy the requirement of a super-far coverage (for example, the radius is greater than 100 km or even over 200 km).

### SUMMARY

Embodiments of the present invention provide a communication method, a user equipment and a base station, which can support a cell with larger coverage.

In one aspect, a communication method is provided, which includes: sending, by a base station, a random access response message to a user equipment UE, where the random access response message includes a timing advance command, and a value *T_{A}* of the timing advance command is N_{TA}/(N*Ts), where the N_{TA} indicates the amount of time alignment of the UE, the N*Ts indicates a unit granularity for the UE to perform time alignment, the N is greater than 16, and the Ts indicates the smallest time unit.

In another aspect, a communication method is provided, which includes: receiving, by a user equipment UE, a random access response message sent by a base station, where the random access response message includes a timing advance command, and a value of the timing advance command is *T_{A}*; determining, by the UE, the amount of the time alignment according to the time advance command, where the amount of the time alignment N_{TA} is *T_{A}**N*Ts, the N*Ts indicates a unit granularity for the UE to perform time alignment, the N is greater than 16, and the Ts indicates the smallest time unit.

In another aspect, a base station is provided, which includes: a processor, configured to determine the amount of the time alignment N_{TA} of a UE according to a preamble sequence received from the user equipment UE; and a sender, configured to send a random access response message to the UE, where the random access response message includes a timing advance command, and a value *T_{A}* of the timing advance command is N_{TA}/(N*Ts), where N*Ts indicates a unit granularity for the UE to perform time alignment, N is an integer greater than 16, and Ts indicates the smallest time unit.

In another aspect, a UE is provided, which includes: a receiver, configured to receive a random access response message sent by a base station, where the random access response message includes a timing advance command, and a value of the timing advance command is *T_{A}*; and a processor, configured to determine the amount of the time alignment according to the value of the timing advance command, where the amount of the time alignment N_{TA} is *T_{A}**N*Ts, the N*Ts indicates a unit granularity for the UE to perform time alignment, the N is greater than 16, and the Ts indicates the smallest time unit.

The technical solutions may enlarge the unit granularity for the UE to perform time alignment, so that the UE can use a larger amount of the time alignment when performing the time alignment, thereby supporting the coverage of a cell with a long distance.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a communication method according to an embodiment of the present invention;
FIG. 2 is a communication method according to another embodiment of the present invention;
FIG. 3 is a schematic diagram of a communication process according to an embodiment of the present invention;
FIG. 4 is a schematic structural diagram of a base station according to an embodiment of the present invention; and
FIG. 5 is a schematic structural diagram of a user equipment according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

It should be understood that, technical solutions of the present invention may be applied to various communication systems, such as: a global system of mobile communication (Global System of Mobile communication, GSM for short) system, a code division multiple access (Code Division Multiple Access, CDMA for short) system, a wideband code division multiple access (Wideband Code Division Multiple Access, WCDMA for short) system, a general packet radio service (General Packet Radio Service, GPRS for short), an LTE system, an advanced long term evolution (Advanced long term evolution, LTE-A for short) system and an universal mobile telecommunication system (Universal Mobile Telecommunication System, UMTS for short), which are not limited in the embodiments of the present invention. For the purpose of convenient description, the embodiments of the present invention take an LTE network as an example for illustration.

The embodiments of the present invention may be used in radio networks of different standards. A radio access network in different systems may include different network elements. For example, network elements of radio access networks in the LTE and the LTE-A include an eNB, and network elements of a radio access network in the WCDMA includes a radio network controller (Radio Network Controller, RNC for short) and a NodeB. Similarly, other radio networks such as a worldwide interoperability for microwave access (Worldwide Interoperability for Microwave Access, WiMax for short) network may also use solutions similar to those of the embodiments of the present invention, and only relevant modules in a base station system may be different, which is not limited in the embodiments of the present invention. For the purpose of convenient description, the following embodiments take an eNB as an example for illustration.

Furthermore, it should be understood that, in the embodiments of the present invention, a terminal may also be referred to as a user equipment (User Equipment, UE for short), a mobile station (Mobile Station, MS for short), a mobile terminal (Mobile Terminal), and so on. The terminal may perform communications with one or more core networks through a radio access network (Radio Access Network, RAN for short). For example, the terminal may be a mobile phone (or referred to as a "cellular" phone), or a computer with a mobile terminal, for example, the terminal may also be a portable, pocket-type, handheld, computer-integrated or vehicle-mounted mobile device.

According to the embodiments of the present invention, the problem of the LTE network access of the cell with a super-far coverage may be solved by enlarging a unit granularity for the UE to perform time alignment.

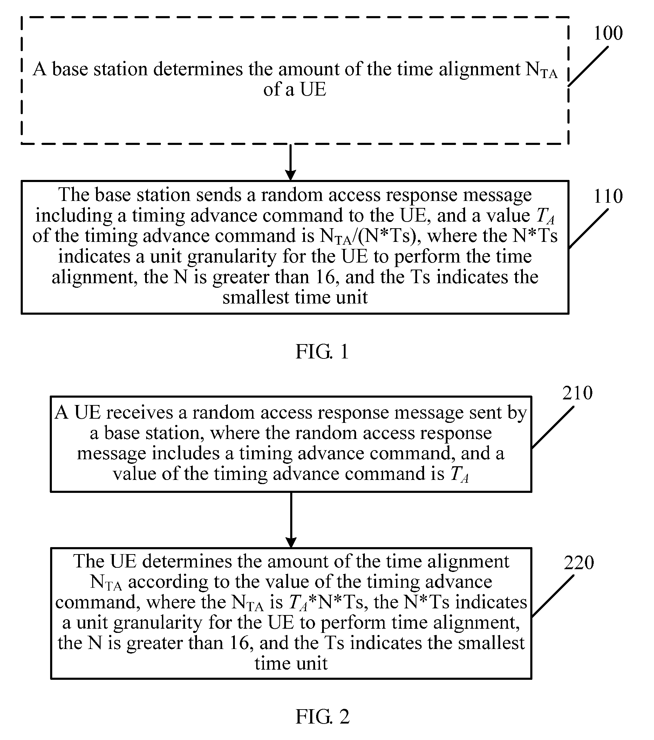

FIG. 1 is a communication method according to an embodiment of the present invention. The method in FIG. 1 may be executed by a base station, and the method includes the following steps:

110: The base station sends an RAR message to a UE, where the RAR message includes a timing advance command and a value *T_{A}* of the timing advance command is N_{TA}/(N*Ts), where the N_{TA} indicates the amount of time alignment of the UE, the N*Ts indicates a unit granularity for the UE to perform time alignment, the N is greater than 16, and the Ts indicates the smallest time unit.

Specifically, the base station may obtain the value *T_{A}* of the timing advance command by measuring an uplink signal sent by the UE. For example, the base station may first obtain the amount of the time alignment of the UE by measuring the uplink signal sent by the UE, and may use a formula *T*_{A}=N_{TA}/(N*Ts) to calculate the value *T_{A}* of the timing advance command according to the amount of the time alignment.

Then, the base station may return the timing advance command to the UE through the RAR message. For example, the timing advance command may be in an octonary form, so that the UE learns the value *T_{A}* of the timing advance command from the timing advance command in the received RAR message, uses a formula N_{TA}=*T*_{A}*N*Ts to learn the amount of the time alignment N_{TA}, and performs uplink time alignment according to the amount of the time alignment. For example, the value range of the value *T_{A}* of the timing advance command may be from 0 to 1282, but the embodiment of the present invention is not limited hereto. For example, the maximum value of the *T_{A}* may be greater than 1282.

When the system on which the base station is based is an LTE system, the Ts may be the smallest time unit of the LTE system. In a conventional LTE system, the value of the N in the unit granularity N*Ts for the UE to perform time alignment is 16. According to the embodiment of the present invention, the unit granularity for UE to perform time alignment may be enlarged by making the N be greater than 16.

The RAR message may be a response message used by the base station for responding to initial random access initiated by the UE. The embodiment of the present invention is not limited hereto. For example, after out-of-synchronization occurs in the UE, the base station may send the RAR message to the UE in a new random access process initiated by the UE.

According to the embodiment of the present invention, the unit granularity for the UE to perform time alignment may be enlarged, so that the UE can use a larger amount of the time alignment when performing the time alignment, thereby supporting the coverage of a cell with a long distance.

According to the embodiment of the present invention, the base station may determine the amount of the time alignment N_{TA} of the UE according to a preamble sequence received from the UE (as shown in step 100 of FIG. 1).

For example, in the process in which the UE accesses to the LTE initially, the UE may send an uplink PRACH preamble sequence to the base station. By measuring the preamble sequence, the base station may obtain the amount of the time alignment needed by the UE.

According to an embodiment of the present invention, the N is 32, 40 or 60, and the Ts is 1/(15000*2048) seconds.

For example, when the value range of the timing advance command is from 0 to 1282, if the N is 32, the access of a cell with maximum coverage of 200 km may be supported. For example, the radius of the cell may be acquired through the following formula: 1282×32/(15000×2048)×300000/2=200.31 km. If the N is 40, the access of a cell with maximum coverage of 250 km may be supported. For example, the radius of the cell may be acquired through the following formula: 1282×40/(15000×2048)×300000/2=250.39 km. If the N is 60, the access of a cell with maximum coverage of 375 km may be supported. For example, the radius of the cell may be acquired through the following formula: 1282×60/(15000×2048)×300000/2=375.59 km. It should be understood that, according to different requirements for the cell coverage of the base station, the N may be other corresponding values greater than 16.

Optionally, as another embodiment, the method in FIG. 1 further includes: notifying, by the base station, the UE of the N.

For example, when there are base stations supporting different coverage in a communication system, a value of the N set by different base stations may be different. The base station may inform the UE of the value of the N when performing the time alignment by using dedicated signaling or by carrying indication information (for example, a flag bit) in an existing signaling message. Definitely, the embodiment of the present invention is not limited hereto. The base station may send the value of the N directly to the UE. Optionally, the value of the N may be preset in the UE.

According to an embodiment of the present invention, the value *T_{A}* of the timing advance command is any integer from 0 to 1282, and a length of the timing advance command is 11 bits.

Optionally, as another embodiment, the value *T_{A}* of the timing advance command is any integer from 0 to 2047, and a length of the timing advance command is 11 bits.

For example, when the maximum value *T_{A}* of the timing advance command is 2047 and N=20, the access of a cell with maximum coverage of 200 km may be supported, and the radius of the cell may be acquired through the following formula: 2047x20/(15000x2048)x300000/2=200 km. Compared with the case that the coverage of 200 km is supported when the maximum value of the timing advance command is 1282 and N=30, in the case that the maximum value *T_{A}* of the timing advance command is 2047 and N=20, the precision of the time alignment of the UE is higher. For example, in this case, a unit granularity of the time alignment is 20/(15000*2048)=0.651, but in the case that the maximum value of the timing advance command is 1282 and N=30, a unit granularity of the time alignment is 30/(15000*2048)=0.97656.

The value *T_{A}* of the timing advance command may be obtained by extending the limit of a length of the timing advance command and/or the value of the timing advance command in the RAR. For example, the value of the timing advance command may be greater than 1282. For another example, a length of the timing advance command may be extended to 12 bits, and the timing advance command may be any value from 0 to 4095 (including 4095).

Optionally, as another embodiment, a length of the timing advance command is 12 bits, and the value *T_{A}* of the timing advance command is any integer from 0 to 4095.

For example, 11 bits of the timing advance command in an original RAR message and 1 bit of a reserved bit in the RAR are used for jointly indicating the value of the timing advance command, and the reserved bit may be a reserved bit adjacent to the timing advance command. For example, the value 4095 of the timing advance command may support the access of a cell with maximum coverage of 640 km, and the radius of the cell may be acquired through the following formula: 4095x32/(15000x2048)x300000/2=640 km. Optionally, a length of the timing advance command may be greater than 12.

For example, according to the embodiment of the present invention, the range of the amount of the time alignment may be changed by adjusting the value range of the *T_{A}* and the value of the N at the same time, so that the base station can support larger coverage. In addition, by adjusting the value range of the *T_{A}* and the value of the N at the same time, the precision of the time alignment may also be selected flexibly as required. For example, in the case of supporting the same coverage, the larger the value range of the *T_{A}* is, the smaller the N may be. That is, the smaller the unit granularity N*Ts may be, the larger the precision of the time alignment may be. In other words, according to the embodiment of the present invention, the N may be a certain value greater than 16, or the value range of the *T_{A}* may be selected, so that the UE has different unit granularities when performing the time alignment.

According to the embodiment of the present invention, the base station may further send the timing advance command of which a length is at least 12 bits or of which the value is greater than 1282 to the UE in the RAR message, so that the UE can use a larger amount of the time alignment when performing the time alignment, thereby supporting the coverage of a cell with a long distance. In addition, by adjusting the values of the N and the *T_{A}* jointly, the needed precision of time alignment may be obtained.

FIG. 2 is a communication method according to another embodiment of the present invention. The method in FIG. 1 is executed by a UE and is corresponding to the method in FIG. 2, so repeated descriptions are not described. The method includes the following steps:

210: The UE receives an RAR message sent by a base station, where the RAR message includes a timing advance command, and a value of the timing advance command is *T_{A}*.

220: The UE determines the amount of the time alignment N_{TA} according to the value of the timing advance command, where the N_{TA} is *T*_{A}*N*Ts, the N*Ts is a unit granularity for the UE to perform time alignment, the N is greater than 16, and the Ts is the smallest time unit.

It should be understood that, the amount of the time alignment N_{TA} is used by the UE for performing uplink time alignment. That is, after step 220, the UE may perform the uplink time alignment according to the amount of the time alignment N_{TA}.

According to the embodiment of the present invention, the unit granularity for the UE to perform time alignment may be enlarged, so that the UE can use a larger amount of the time alignment when performing the time alignment, thereby supporting the coverage of a cell with a long distance.

According to an embodiment of the present invention, the N is 32, 40 or 60, and the Ts is 1/(15000*2048) seconds.

Optionally, as another embodiment, the method in FIG. 2 further includes: receiving, by the UE, the N from the base station.

According to an embodiment of the present invention, the value *T_{A}* of the timing advance command is any integer from 0 to 1282, and a length of the timing advance command is 11 bits.

Optionally, as another embodiment, the value *T_{A}* of the timing advance command is any integer from 0 to 2047, and a length of the timing advance command is 11 bits.

Optionally, as another embodiment, a length of the timing advance command is 12 bits, and the value *T_{A}* of the timing advance command is any integer from 0 to 4095.

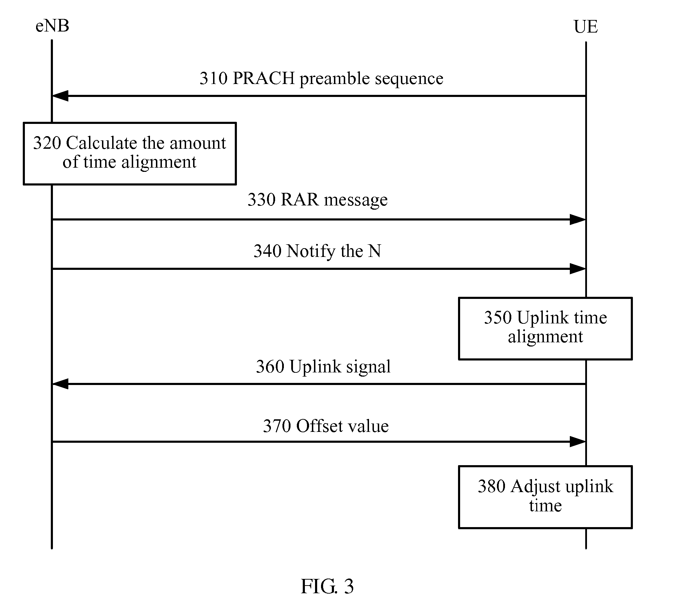

FIG. 3 is a schematic diagram of a communication process according to an embodiment of the present invention. The embodiment in FIG. 3 is an example of the methods in FIG. 1 and FIG. 2. The embodiment includes the following steps:

310: A UE sends a PRACH preamble sequence to an eNB.

For example, in the process in which the UE performs initial random access or in the process in which the UE performs new random access after out-of-synchronization, the UE sends the PRACH preamble sequence to the eNB.

320: The eNB measures the received PRACH preamble sequence, so as to obtain the amount of time alignment.

For example, the eNB may obtain the amount of the time alignment of the UE by measuring the PRACH preamble sequence sent by the UE, and may use a formula *T_{A}=N_{TA}*/(N*Tₛ) to calculate a value *T_{A}* of the timing advance command according to the amount of the time alignment. For example, the Tₛ may be 1/(15000*2048) seconds. For example, the N may be greater than 16, and the N may be 32, 40 or 60.

Optionally, in order to support larger coverage and certain time alignment precision, that is, to set the value of the N to be relatively small, for example, the N may be 20, the value range (from 0 to 1282) of the timing advance command defined by an LTE protocol may be further extended to 0 to 2047, or extended to a certain value from 1282 to 2047 as required. In addition, the value range of the timing advance command may be further extended by extending a length (11 bits) of the timing advance command. Optionally, an RAR message may include the timing advance command of 12 bits. For example, 11 bits of the timing advance command in the RAR defined in the LTE protocol and 1 bit of an adjacent reserved bit are used for jointly indicating the value of the timing advance command, so a length of the timing advance command may be extended to 12 bits. Correspondingly, the value range of the timing advance command is extended to 0 to 4095, or extended to a certain value from 2047 to 4095 as required.

330: The eNB sends an RAR message to the UE, where the RAR message includes the timing advance command, and the value of the timing advance command is corresponding to the amount of the time alignment.

The eNB may return the timing advance command to the UE through the RAR message. For example, the timing advance command may be in an octonary form, so that the UE learns the value *T_{A}* of the timing advance command from the timing advance command of the received RAR message, uses a formula N_{TA}=*T*_{A}*N*Ts to learn the amount of the time alignment N_{TA}, and performs uplink time alignment according to the amount of the time alignment.

340: The eNB notifies the UE of the N.

For example, when there are eNBs supporting different coverage in a communication system, a value of the N set by different eNBs may be different, and the eNB may inform the UE of the value of the N when performing the time alignment by using dedicated signaling or by carrying indication information in the existing signaling message. For example, when a flag bit of the indication information is 0, it indicates that the N is 16, and when the flag bit is 1, it indicates that the N is 30. In order to indicate more values, the flag bit may also be multiple bits. For example, when the flag bit is 2 bits, 00 indicates that the N is 16, 01 indicates that the N is 30, 10 indicates that the N is 40, 11 indicates that the N is 60, and so on. Definitely, the embodiment of the present invention is not limited hereto. The eNB may send the value of the N directly to the UE. Optionally, the value of the N may be preset in the UE. It should be noted that, step 340 is optional and may be executed at any time before the UE performs the time alignment.

350: The UE performs initial uplink time alignment according to the value of the timing advance command. For example, the value of the timing advance command is indicated by the *T_{A}*, the UE calculates the amount of the time alignment *N_{TA}* = *T_{A}**N*Tₛ according to the *T_{A}*, and performs the time alignment according to the *N_{TA}* when sending an uplink signal to the eNB.

360: After accessing the LTE system, the UE obtains initial uplink synchronization, and may start to send the uplink signal to the eNB.

370: By measuring the uplink signal sent by the UE, such as, a sounding reference signal (Sounding Reference Signal, SRS for short), a channel quality indicator (Channel quality indicator, CQI for short), an HARQ or data in a physical uplink shared channel (Physical Uplink Shared Channel, PUSCH for short), the eNB may obtain an offset value between the current amount of the timing advance and the last amount of the timing advance, and sends the offset value to the UE, where the offset value is 6 bits and its value is from 0 to 63.

380: After the offset value is received on the n^{th} sub-frame, the UE performs corresponding time adjustment on a sub-frame n+6 according to the offset value. If the time adjustment due to the timing advance makes a sub-frame n+5 and the sub-frame n+6 have an overlapping part, the UE may transmit a complete sub-frame n+5 and neglect the sub-frame n+6.

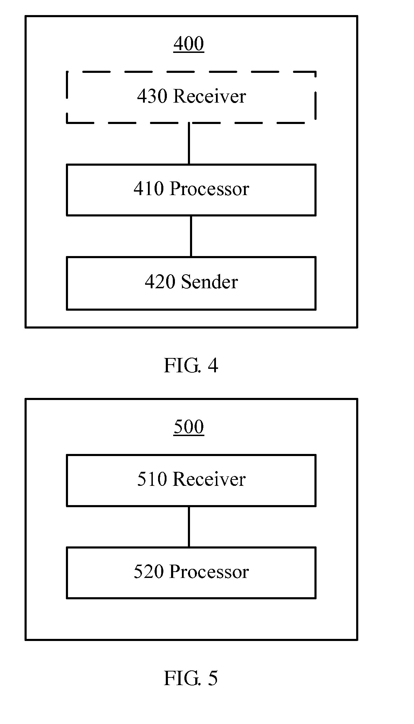

The method for implementing the coverage of a cell with a long distance according to the embodiment of the present invention is described in the foregoing, and the base station and the UE according to the embodiment of the present invention are described with reference to FIG. 4 and FIG. 5 below, respectively.

FIG. 4 is a schematic structural diagram of a base station 400 according to an embodiment of the present invention. The base station 400 includes a processor 410 and a sender 420.

The processor 410 determines the amount of time alignment N_{TA} of a UE according to a preamble sequence received from the UE. The sender 420 sends an RAR message to the UE, where the RAR message includes a timing advance command and a value *T_{A}* of the timing advance command is N_{TA}/(N*Ts), where the N*Ts indicates a unit granularity for the UE to perform time alignment, the N is greater than 16, and the Ts indicates the smallest time unit.

According to the embodiment of the present invention, the unit granularity for the UE to perform time alignment may be enlarged, so that the UE can use a larger amount of the time alignment when performing the time alignment, thereby supporting the coverage of a cell with a long distance.

Optionally, the base station 400 further includes a receiver 430. The receiver 430 receives the preamble sequence from the UE.

According to an embodiment of the present invention, the N is 32, 40 or 60, and the Ts is 1/(15000*2048) seconds.

Optionally, as another embodiment, the sender notifies the UE of the N.

According to an embodiment of the present invention, the value *T_{A}* of the timing advance command is any integer from 0 to 1282, and a length of the timing advance command is 11 bits.

Optionally, as another embodiment, the value *T_{A}* of the timing advance command is any integer from 0 to 2047, and a length of the timing advance command is 11 bits.

Optionally, as another embodiment, a length of the timing advance command is 12 bits, and the value *T_{A}* of the timing advance command is any integer from 0 to 4095.

Reference may be made to the method in FIG. 1 for the operation and function of each unit of the base station 400, which are not repeated again herein.

FIG. 5 is a schematic structural diagram of a UE 500 according to another embodiment of the present invention. The UE 500 includes a receiver 510 and a processor 520.

The receiver 510 receives an RAR message sent by a base station, where the RAR message includes a timing advance command, and a value of the timing advance command is *T_{A}*. The processor 520 determines the amount of time alignment N_{TA} according to the value of the timing advance command, where the N_{TA} is *T_{A}**N*Ts, the N*Ts indicates a unit granularity for the UE to perform time alignment, the N is greater than 16, and the Ts indicates the smallest time unit.

According to the embodiment of the present invention, the unit granularity for the UE to perform time alignment may be enlarged, so that the UE can use a larger amount of the time alignment when performing the time alignment, thereby supporting the coverage of a cell with a long distance.

According to an embodiment of the present invention, the N is 32, 40 or 60, and the Ts is 1/(15000*2048) seconds.

Optionally, as another embodiment, the receiver 510 further receives the N from the base station.

According to an embodiment of the present invention, the value *T_{A}* of the timing advance command is any integer from 0 to 1282, and a length of the timing advance command is 11 bits.

Optionally, as another embodiment, the value *T_{A}* of the timing advance command is any integer from 0 to 2047, and a length of the timing advance command is 11 bits.

Optionally, as another embodiment, a length of the timing advance command is 12 bits, and the value *T_{A}* of the timing advance command is any integer from 0 to 4095.

It should be noted that, the receiver 510 is connected to an antenna thereof.

Reference may be made to the method in FIG. 2 for the operation and function of each unit of the UE 500, which are not repeated again herein to avoid repetition.

An embodiment of the present invention further provides a communication system, which may include the user equipment and the base station of the foregoing embodiments.

Persons of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be division in other manners in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, may be located in one position, or may be distributed on a plurality of network units. A part or all of the units may be selected according to an actual need to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or part of the technical solutions may be implemented in the form of a software product. The computer software product is stored in a storage medium, and includes several instructions for instructing a computer device (which may be a personal computer, a server, or a network device) to perform all or a part of the steps of the method described in the embodiment of the present invention. The storage medium includes: any medium that can store program codes, such as a USB flash disk, a removable hard disk, a read-only memory (Read-Only Memory, ROM for short), a random access memory (Random Access Memory, RAM for short), a magnetic disk, or an optical disk.

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A communication method, comprising:
sending, by a base station, a random access response message to a user equipment UE, wherein the random access response message comprises a timing advance command, and a value *T_{A}* of the timing advance command is N_{TA}/(N*Ts), wherein the N_{TA} indicates the amount of time alignment of the UE, the N*Ts indicates a unit granularity for the UE to perform time alignment, the N is greater than 16, and the Ts indicates the smallest time unit.

2. The method according to claim 1, further comprising:
determining the amount of the time alignment N_{TA} of the UE according to a preamble sequence received from the UE.

3. The method according to claim 1 or 2, wherein the N is 32, 40 or 60, and the Ts is 1/(15000*2048) seconds.

4. The method according to any one of claims 1 to 3, further comprising:
notifying, by the base station, the UE of the N.

5. The method according to any one of claims 1 to 4, wherein:
the value *T_{A}* of the timing advance command is any integer from 0 to 1282, and a length of the timing advance command is 11 bits;
or
the value *T_{A}* of the timing advance command is any integer from 0 to 2047, and a length of the timing advance command is 11 bits;
or
a length of the timing advance command is 12 bits, and the value *T_{A}* of the timing advance command is any integer from 0 to 4095.

6. A communication method, comprising:
receiving, by a user equipment UE, a random access response message sent by a base station, wherein the random access response message comprises a timing advance command, and a value of the timing advance command is *T_{A}*; and
determining, by the UE, the amount of time alignment N_{TA} according to the value of the timing advance command, wherein the N_{TA} is TA*N*Ts, the N*Ts indicates a unit granularity for the UE to perform time alignment, the N is greater than 16, and the Ts indicates the smallest time unit.

7. The method according to claim 5, wherein the N is 32, 40 or 60, and the Ts is 1/(15000*2048) seconds.

8. The method according to claim 5 or 6, further comprising:
learning, by the UE, the N from the base station.

9. The method according to any one of claims 5 to 7, wherein the value *T_{A}* of the timing advance command is any integer from 0 to 1282, and a length of the timing advance command is 11 bits;
or
the value *T_{A}* of the timing advance command is any integer from 0 to 2047, and a length of the timing advance command is 11 bits;
or
a length of the timing advance command is 12 bits, and the value *T_{A}* of the timing advance command is any integer from 0 to 4095.

10. A base station, comprising:
a processor, configured to, according to a preamble sequence received from a user equipment UE, determine the amount of time alignment N_{TA} of the UE; and
a sender, configured to send a random access response message to the UE, wherein the random access response message comprises a timing advance command, and a value *T_{A}* of the timing advance command is N_{TA}/(N*Ts), wherein the N*Ts indicates a unit granularity for the UE to perform time alignment, the N is greater than 16, and the Ts indicates the smallest time unit.

11. The base station according to claim 10, further comprising:
a receiver, receiving the preamble sequence from the UE.

12. The base station according to claim 10 or 11, wherein the sender further notifies the UE of the N.

13. A user equipment, comprising:
a receiver, configured to receive a random access response message sent by a base station, wherein the random access response message comprises a timing advance command, and a value of the timing advance command is *T_{A}*; and
a processor, configured to determine the amount of the time alignment N_{TA} according to the value of the timing advance command, wherein the N_{TA} is *T*_{A}*N*Ts, the N*Ts indicates a unit granularity for the UE to perform time alignment, the N is greater than 16, and the Ts indicates the smallest time unit.

14. The user equipment according to claim 13, wherein the receiver further learns the N from the base station.
